# EUROPEAN PATENT APPLICATION

(11) **EP 1 586 795 A1**
(43) Date of publication of application: **19.10.2005**
(21) Application number: 04702791.7
(22) Date of filing: 16.01.2004
(51) Int. Cl.: F16H 55/22, B23P 15/14, B29C 45/14

(54) **WORM WHEEL AND METHOD OF MANUFACTURING THE WORM WHEEL**

(30) Priority: 17.01.2003 JP 2003010000
(71) Applicant: NSK Ltd., Tokyo 141-8560 (JP); NSK Steering Systems Co. Ltd, Shinagawa-ku, Tokyo 141-8560 (JP)
(72) Inventor: YAMAMOTO, Takeshi c/o NSK STEERING SYST.CO., LTD., Maebashi-shi, Gunma 3718528 (JP); IWANO, Toshiyuki c/o NSK STEERING SYST. CO., LTD., Maebashi-shi, Gunma 3718523 (JP)
(74) Representative: Baldwin, Mark
(86) International application number: PCT/JP2004/000266
(87) International publication number: WO 2004/065824

(57) **Abstract**

In a worm wheel (41) and a method of manufacturing the same, the worm wheel has a metal worm wheel element (51) in which an axial bore (55) is formed at a rotational center and a synthetic resin gear ring (53) attached on the outer circumference of the worm wheel element, and a centering guide portion (77) that is coaxial with the axial bore (55) is formed on one surface of the metal worm wheel element (51).

## Description

### TECHNICAL FIELD

The present invention relates to a worm wheel having a worm wheel element made of a metal and a gear ring made of a synthetic resin and a method of manufacturing the same. More particularly, the present invention relates to a technology for improving coaxiality of the synthetic resin gear ring and the metal worm wheel element.

### BACKGROUND ART

So-called power steering apparatuses that provide steering assist using an external drive source are widely used in steering systems for automobiles.

Conventionally, hydraulic vane pumps are commonly used as the power source for power steering apparatuses. In most cases, the hydraulic pump is driven by an engine. However, this type of power steering apparatus suffers from a large drive loss (as much as about several horsepower to ten horsepower at the maximum load) due to continuous driving of the hydraulic pump, and therefore, a considerable decrease in gas mileage is inevitable in, for example, light automobiles with a small engine displacement. As a solution for this and other problems, electric power steering apparatuses using an electric motor as the power source have been gaining attention in recent years.

Advantageous features of the electric power steering apparatus are that it suffers from no direct engine drive loss (i.e. engine drive loss caused by a hydraulic pump) since an in-vehicle battery is used as the power source for the electric motor, a decrease in the gas mileage can be suppressed since the electric motor is activated only upon effecting steering assist, and electric control can be performed very easily in accordance with the running speed etc. There are various types of electric power steering apparatuses, such as a column assist type, a rack assist type and a pinion assist type, depending on the portion at which an electric motor or the like (an assist mechanism) is attached.

In column assist type electric power steering apparatuses, electric motors with a relatively high rotation and a low torque are used. Accordingly, a reduction mechanism is provided between the electric motor and the steering shaft. In many cases, the reduction mechanism is constructed as a worm reduction mechanism composed of a worm gear and a worm wheel. The worm gear is connected to the rotating shaft of the electric motor, while the worm wheel meshing with the worm gear is fitted on an output shaft, which, in turn, is coupled to the steering shaft. These parts are provided in the interior of a motor housing that also serves as a gear box. In some cases, a worm wheel produced by attaching a gear ring made of a synthetic resin to the rim of a metal wheel so as to prevent a decrease in the transmission efficiency or an increase in the weight, to reduce driving noise and to make lubricant supply unnecessary (see, for example, Japanese Patent Application Laid-Open No. 11-294544 (page 2 and Fig. 10), Japanese Patent Application Laid-Open No. 2000-329217 (page 3 and Figs. 2 and 4) and Japanese Patent Application Laid-Open No. 2000-95122 (page 4 and Figs. 1 and 2)).

In the worm wheels disclosed in the above-mentioned patent documents, a metal worm wheel element is set in a mold having a core pin, and then molten synthetic resin is injected into the mold to form a synthetic resin gear ring integrally on the outer circumference of the rim of the metal worm wheel element. When the metal worm wheel element is set in the mold, there will be a certain clearance between the core pin and the bearing of the metal worm wheel element. Accordingly, the metal worm wheel element can be inclined and displaced in the radial direction relative to the mold, whereby coaxiality of the metal wheel and the synthetic resin gear ring is deteriorated. However, since the synthetic resin gear ring thus formed is cut by a hob cutter to form worm teeth, even if coaxiality of the metal worm wheel element and the synthetic resin gear ring upon injection molding is low to a degree, the center axis of the metal worm wheel element and the center axis of the worm teeth will coincide with each other in the finished worm wheel.

However, in conventional arts, a steering angle sensor is sometimes annexed to the electric assist mechanism. In such cases, the steering angle sensor is provided in a key switch box by retrofit or disposed on the output shaft (shaft below the torque sensor) of the steering shaft.

Furthermore, the applicant of this patent application has proposed, in Japanese Patent Application Laid-Open No. 2002-236846, Japanese Patent Application Laid-Open No. 2002-195042 and Japanese Patent Application Laid-Open No. 2002-330400, arrangements in which a gear for the sensor is disposed in the worm wheel portion of the reduction mechanism. In the case of one of them in which an internal gear for driving a pinion of the steering angle sensor is formed on the synthetic resin gear ring, the internal gear is formed in the injection molding process by a female mold for the internal gear engraved on the mold, but post-processing (cutting etc.) is not performed unlike with the worm teeth. Accordingly, in the case that coaxiality of the metal worm wheel element and the synthetic resin gear ring is low, the internal gear will become eccentric to the output shaft when the metal worm wheel element is press fitted to the output shaft. Then, a fine adjustment operation is required to be carried out in the assembling process to achieve smooth engagement of the pinion of the steering angle sensor and the internal gear.

### DISCLOSURE OF THE INVENTION

The present invention has been made in view of the above-described circumstances. An object of the present invention is to provide a worm wheel in which coaxiality of a synthetic resin gear ring and a metal worm wheel element is enhanced and to provide a method for manufacturing such a worm wheel.

To achieve the above object, according to a first aspect of the present invention, there is proposed a worm wheel comprising a metal worm wheel element in which an axial bore is formed at its rotation center and a synthetic resin gear ring attached on the outer circumference of said worm wheel element, wherein a centering guide portion that is coaxial with said axial bore is formed on one surface of said metal worm wheel element.

In the worm wheel according to the first aspect of the present invention, it is preferred that said gear ring be molded on the outer circumference of said worm wheel element.

Furthermore, in the worm wheel according to the first aspect of the present invention, it is preferred that said centering guide portion be a tapered surface.

According to a second aspect of the present invention, there is proposed a method of manufacturing a worm wheel in which a metal worm wheel element is set on a mold and synthetic resin is injection molded in the mold to form a synthetic resin gear ring integrally on the outer circumference of the metal worm wheel element, the method comprising a step of opposing a centering guide portion formed on said metal worm wheel element to a centering guide portion formed on said mold, and a step of pressing the centering guide portion of said metal worm wheel element against the centering guide portion of said mold by injection pressure of the synthetic resin.

In the method of manufacturing a worm wheel according to the second aspect of the present invention, it is preferred that at least one of the centering guide portion of said mold and the centering guide portion of said metal wheel be a tapered surface.

According to the present invention, positioning of the metal worm wheel in the mold can be effected with a high degree of accuracy, and coaxiality of the metal worm wheel element and the synthetic resin gear ring can be enhanced.

### BRIEF DESCRIPTION OF THE DRAWINGS

Fig. 1 is a side view showing the structure of the cabin side portion of a steering apparatus according to the present invention.
Fig. 2 is a longitudinal cross sectional view showing the principal portion of the steering apparatus according to a first embodiment of the present invention.
Fig. 3 is a longitudinal cross sectional view showing a half of a metal worm wheel element according to the first embodiment.
Fig. 4 is a longitudinal cross sectional view showing a half of a mold according to the first embodiment.
Fig. 5 is a half longitudinal cross sectional view illustrating a process of manufacturing a worm wheel according to the first embodiment.
Fig. 6 is a half longitudinal cross sectional view illustrating a process of manufacturing a worm wheel according to the first embodiment.
Fig. 7 is a half longitudinal cross sectional view illustrating a process of manufacturing a worm wheel according to the first embodiment.
Fig. 8 is a half longitudinal cross sectional view illustrating a process of manufacturing a worm wheel according to the first embodiment.
Fig. 9 is a longitudinal cross sectional view showing a half of a metal worm wheel element according to a second embodiment of the present invention.
Fig. 10 is a longitudinal cross sectional view showing a half of a mold according to the second embodiment.

### EMBODIMENT OF THE INVENTION

In the following, embodiments of the present invention will be described with reference to the drawings.

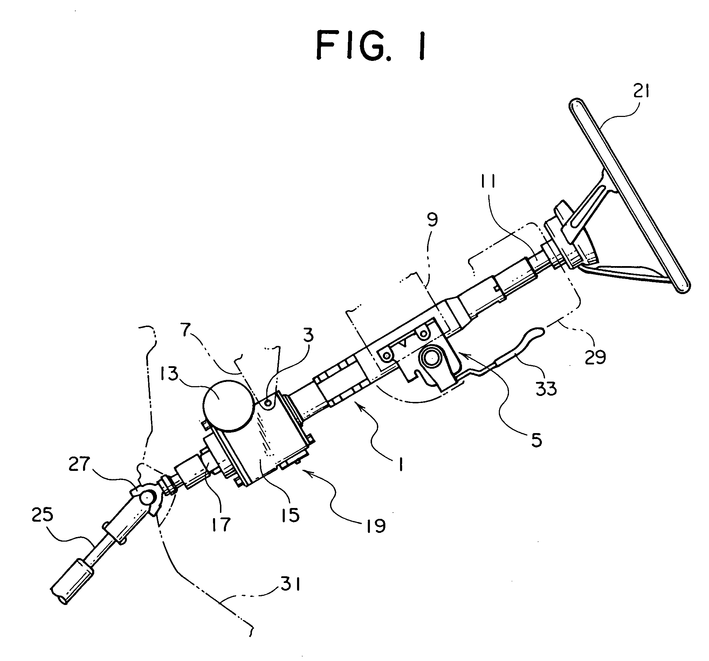

Fig. 1 is a side view showing the cabin side portion of a steering apparatus according to the first embodiment. In this drawing, reference numeral 1 designates a steering column. The steering column 1 is fixed to structural members 7 and 9 of a vehicle body by means of a pivot pin 3 and a tilt adjustment mechanism 5 respectively. Inside the steering column 1, a steering upper shaft 11 is rotatably supported, and an electric assist mechanism 19 composed of an electric motor 13, a gear housing 15 and output shaft 17 etc. is integrally formed on the steering column 1.

A steering wheel 21 is attached to the rear end of the steering upper shaft 11. When a driver turns the steering wheel 21, the rotational force is amplified by the electric assist mechanism 19 and transmitted to the output shaft 17. As shown in Fig. 1, a lower steering shaft 25 is connected to the front end of the output shaft 17 via a universal joint 27 so that a rotational force is transmitted to a steering gear mechanism that is not shown in the drawings. Reference numeral 29 designates a column cover that covers the steering column 1, reference numeral 31 designates a dash board that partitions the cabin and the engine room, and reference numeral 33 designates a tilt lever.

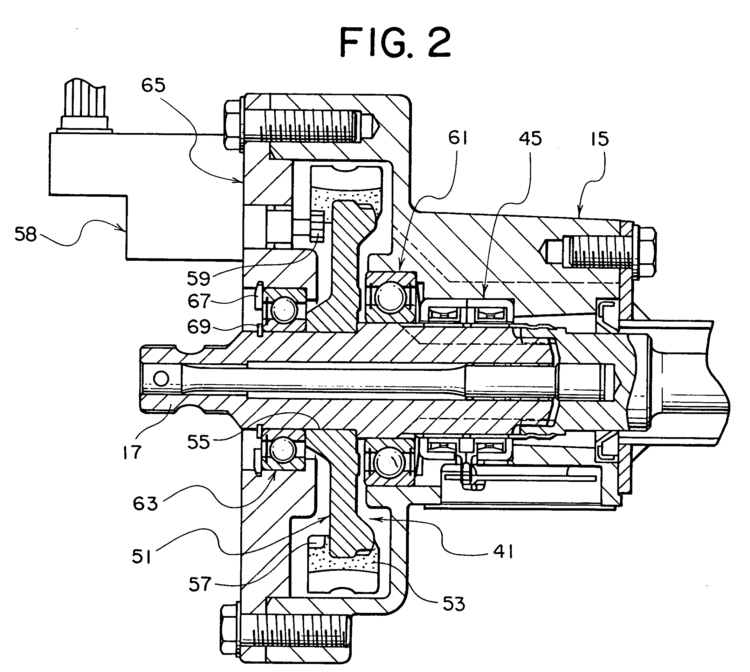

As shown in Fig. 2, a worm wheel 41 is press-fitted on the output shaft 17. The worm wheel 41 is in engagement with a worm (not shown) connected with the electric motor 13; rotation of the electric motor 13 is transmitted to the output shaft 17 while reduced. In this embodiment, the electric motor 13 is driven based on a signal output from a torque sensor 45 disposed on the rear side of the worm wheel 41, though descriptions thereof will be omitted.

The worm wheel 41 in this embodiment is formed by attaching a synthetic resin gear ring (which will be simply referred to as the gear ring, hereinafter) 53 on the outer circumference of a metal worm wheel element (which will be simply referred to as the worm wheel element, hereinafter) 51. In this embodiment, the worm wheel element is formed by cold forging and has an axial bore 55 for supporting the output shaft 17 fitted therein. On the front surface (the left side, in Fig. 2) of the gear ring 53, an internal gear 57 is formed. A drive pinion 59 of a steering angle sensor 58 is in engagement with the internal gear 57.

The output shaft 17 is supported by a sealed roller bearing 61 on the rear side (the right side, in Fig. 2) of the worm wheel 41 and supported by a roller bearing having a seal 63 that abuts the front side (the left side, in Fig. 2) of the worm wheel 41. A cover 65 is secured to the front end of the gear housing 15 as shown in Fig. 2. The roller bearing 63 having a seal is supported on the cover 65 and the output shaft 17 by means of tapered snap rings 67 and 69.

In the following, a process of manufacturing the worm wheel 41 according to the first embodiment will be described with reference to drawings.

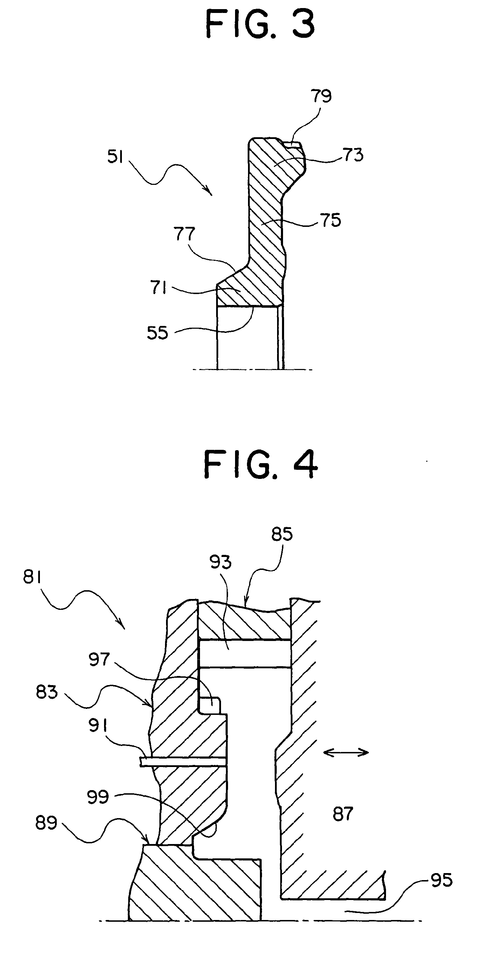

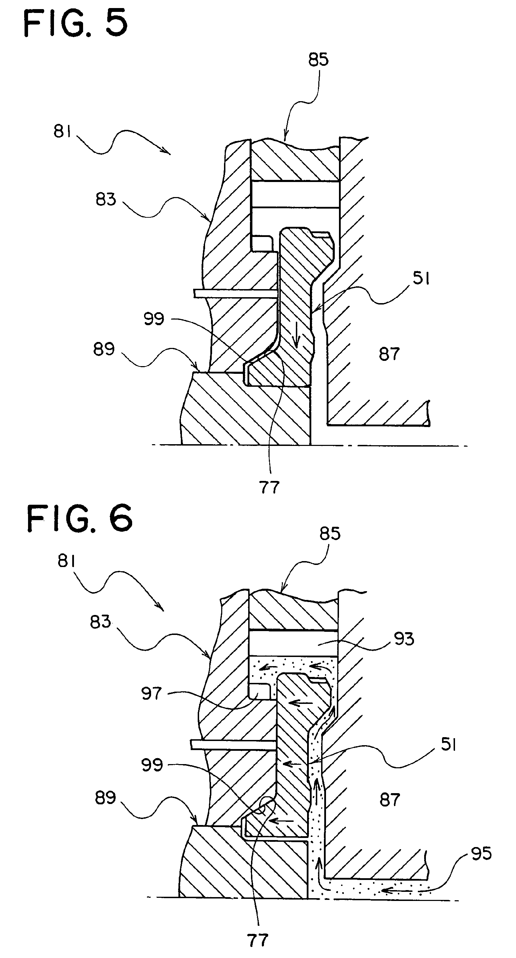

Fig. 3 is a longitudinal cross sectional view showing a half of the metal core or the metal worm wheel element.according to this embodiment. Fig. 4 is a longitudinal cross sectional view showing a half of a mold 81 used for producing a worm wheel. Figs. 5 to 8 are half longitudinal cross sectional views illustrating a process of manufacturing a worm wheel.

As shown in Fig. 3, the worm wheel element 51 in the first embodiment is composed of a boss 71 having an axial bore 55 at its center, a rim 73 on which the gear ring 53 is attached and a web 75 connecting the boss 71 and the rim 73. The boss 71 has a tapered guide surface 77 serving as a centering guide portion formed on the outer circumference of the front side (the left side, in Fig. 3) thereof with a high degree of coaxiality with respect to the axial bore 55. As shown in Fig. 3, indentations 79 are formed on the rim 73 to enhance attachment strength with the gear ring 53.

As shown in Fig. 4, the mold 81 is placed horizontally and composed of a front mold 83 facing the front side of the worm wheel element 51, an outer mold 85 for forming the outer circumferential surface of the gear ring 53, a rear mold 87 that is adapted to move toward and away from the front mold 83 and outer mold 85 along the axial direction and a core pin 89 to be loosely fitted to the axial bore 55 of the worm wheel element 51. In Fig. 4, reference numeral 91 designates an eject pin that is slidably held by the front mold 83, reference numeral 93 designates a helical gear forming portion engraved on the inner circumference of the outer mold 85, and reference numeral 95 designates a resin injection port formed at the center of the rear mold 87. The front mold 83 has an internal gear forming portion 97 engraved on its rear surface and a tapered guide surface 99 serving as a centering guide portion formed at the position corresponding to the tapered guide surface 77 of the worm wheel element 51.

In the following, a process of manufacturing the worm wheel 41 according to the first embodiment will be described.

In the case of this embodiment, the worm wheel element 51 is set in the mold 81 by a manufacturing operator prior to the injection molding process, as shown in Fig. 5. In this operation, since the mold 81 is placed horizontally, the worm wheel element 51 is displaced downwardly by the effect of gravity by an amount corresponding to the clearance between the core pin 89 and the axial bore 55, so that the tapered guide surfaces 77 and 99 are spaced apart from each other.

Next, the manufacturing operator activates an injection molding equipment that is not shown in the drawings to inject high temperature, molten synthetic resin into the cavity of the mold 81 through the resin injection port 95 and applies a dwell pressure. Then, the worm wheel element 51 is strongly pressed against the front mold 83 by the pressure from the molten synthetic resin, so that the tapered guide surface 77 of the worm wheel element 51 and the tapered guide surface 99 of the front mold 83 are brought into pressure contact with each other. Consequently, even if the worm wheel element 51 set on the mold 51 has been misaligned with respect to the radial direction, the misalignment is corrected, and the core pin 89 of the mold 81 and the axial bore 55 of the worm wheel element 51 are opposed with a high degree of coaxiality. Thus, misalignment of the axial bore 55 and the internal gear 57, which has been a problem in conventional apparatuses, is eliminated.

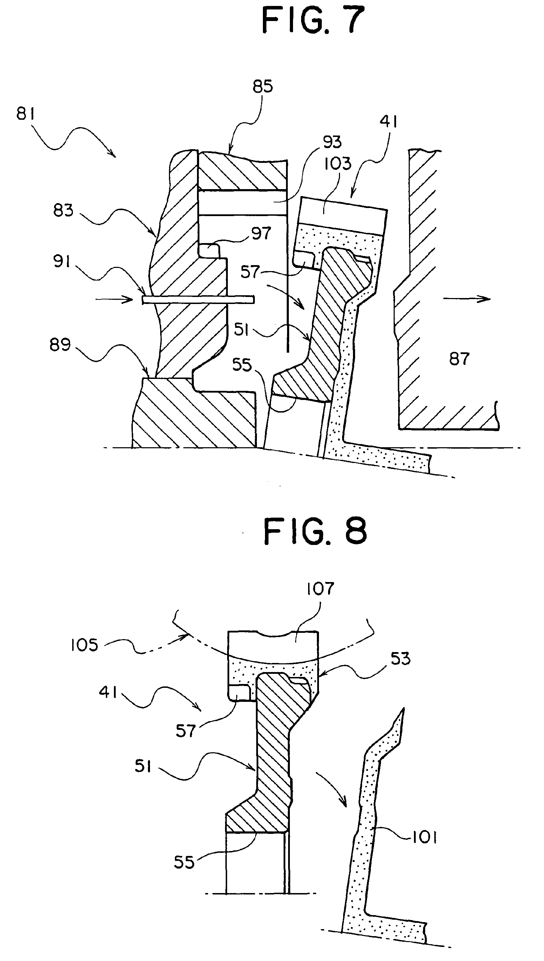

Next, as shown in Fig. 7, the manufacturing operator moves the rear mold 87 of the mold 81 in the rightward direction in the drawing, and drives the eject pin 91 to remove the worm wheel 41 from the mold 81. As shown in Fig. 8, the manufacturing operator cuts a disk gate portion 101, which has been formed for allowing synthetic resin injection, off from the molded worm wheel 41, and performs cutting on the helical gear 103, which has been formed on the outer circumference of the gear ring 53 by the helical gear forming portion 93 on the inner circumference of the outer mold 85, using a hob cutter 105 to produce worm teeth 107.

In the worm wheel 41 thus formed, a very high degree of coaxiality between the internal gear 57 and the axial bore 55 is achieved, and therefore smooth engagement between the internal gear 57 and the drive pinion 59 of the steering angle sensor 58 is realized.

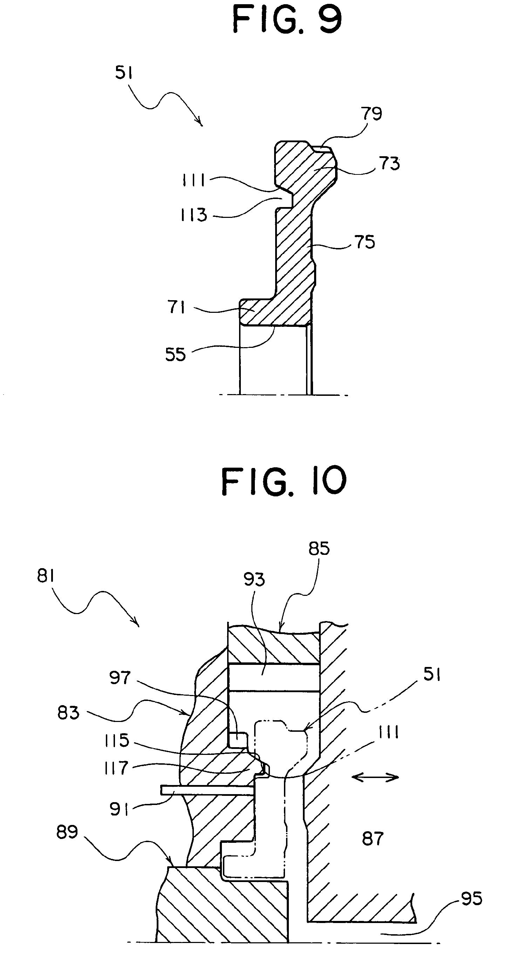

Fig. 9 is a longitudinal cross sectional view showing a half of a metal worm wheel element according to the second embodiment of the present invention. Fig. 10 is a longitudinal cross sectional view showing a half of a mold. The overall structure of the second embodiment is substantially the same as the above-described first embodiment, but the second embodiment differs from the first embodiment in the shape and position of centering guide portions in the worm wheel element 51 and the mold 81. Specifically, in the second embodiment, a notch 113 having a tapered guide surface 111 serving as a centering guide portion is formed on the front side surface of the rim 73 of the worm wheel element 51, and an annular projection 117 having a tapered guide surface 115 is formed at an upper position on the front mold 83 of the mold 81 corresponding to the notch 113. Thus, when the worm wheel element 51 is pressed against the front mold 83 upon injection of synthetic resin into the mold 81, the tapered guide surface 111 of the notch 113 is brought into pressure contact with the tapered guide surface 115 of the annular projection, so that the core pin 89 of the mold 81 and the axial bore 55 of the worm wheel element 51 are opposed with a high degree of coaxiality.

Although specific embodiments of the present invention have been described in the forgoing, modes of the present invention are not limited to these embodiments. For example, although in the above-described embodiments, tapered surfaces are formed as centering guide portions on both the metal worm wheel element and the mold, but the tapered surface may be provided only one of them, or alternatively a curved surface may be provided instead of the tapered surface. Furthermore, although in the above-described embodiments, the present invention is applied to a worm wheel for use in an electric power steering apparatus, the present invention may be applied to a worm wheel for use in a different apparatus. Still further, the specific shape of the worm wheel and mold may be modified fitly without departing from the spirit and scope of the present invention.

As per the above, the worm wheel according to the present invention includes a metal worm wheel element having a boss with an axial bore formed at its rotation center and a rim connected to the boss by a web, and a synthetic resin gear ring formed by injection integrally on the outer circumference of the rim, wherein a centering guide portion coaxial with the aforementioned axial bore is formed on one surface of the aforementioned metal worm wheel element. According to a method for manufacturing a worm wheel according to the present invention, a metal worm wheel element is set in a mold and synthetic resin is injection molded in the mold to form a synthetic resin gear ring integrally on the outer circumference of the rim of the metal worm wheel element. The method includes the steps of opposing a centering guide portion formed on the aforementioned metal worm wheel element to a centering guide portion formed on the aforementioned mold, and pressing the centering guide portion of the aforementioned metal worm wheel element against the centering guide portion of the aforementioned mold by the injection pressure of the synthetic resin. Thus, the metal wheel element is positioned in the mold highly accurately, coaxiality of the metal worm wheel and the synthetic resin gear ring is enhanced. In the case that an internal gear is formed on the synthetic resin gear ring, smooth engagement of the internal gear and a pinion is realized. In addition, in the case of a synthetic resin worm wheel (including one having a helical shape) that is not subjected to cutting, smooth engagement with the worm is realized.

## Claims

1. A worm wheel comprising:
a metal worm wheel element in which an axial bore is formed at a rotation center; and
a synthetic resin gear ring attached on the outer circumference of said worm wheel element,
wherein a centering guide portion that is coaxial with said axial bore is formed on one surface of said metal worm wheel element.

2. A worm wheel according to claim 1, wherein said gear ring is molded on the outer circumference of said worm wheel element.

3. A worm wheel according to claim 1 or 2, wherein said centering guide portion comprises a tapered surface.

4. A method of manufacturing a worm wheel in which a metal worm wheel element is set on a mold and synthetic resin is injection molded in the mold to form a synthetic resin gear ring integrally on the outer circumference of the metal worm wheel element, comprising the steps of:
opposing a centering guide portion formed on said metal worm wheel element to a centering guide portion formed on said mold; and
pressing the centering guide portion of said metal worm wheel element against the centering guide portion of said mold by injection pressure of the synthetic resin.

5. A method of manufacturing a worm wheel according to claim 4, wherein at least one of the centering guide portion of said mold and the centering guide portion of said metal wheel comprises a tapered surface.
